# EUROPEAN PATENT APPLICATION

(11) **EP 4 756 722 A1**
(43) Date of publication of application: **10.06.2026**
(21) Application number: 24217881.2
(22) Date of filing: 05.12.2024
(51) Int. Cl.: G06T 13/00

(54) **INCREMENTAL PARAMETRIC MODELLING BASED ON 3D SCANNING DATA**

(71) Applicant: Hexagon Innovation Hub GmbH, 9435 Heerbrugg (CH)
(72) Inventor: LOPEZ FERNANDEZ, Luis, 9450 Lüchingen (CH); PRADOS-TORREBLANCA, Andres, 9008 St.Gallen (CH); WINISTÖRFER, Martin, 9453 Eichberg (CH)
(74) Representative: Kaminski Harmann

(57) **Abstract**

The invention relates to a method for generating a parameter set for modelling a real-world object in a scene. The parameter set represents information about the spatial extent and location of the first object in a reference system associated with the scene. The method comprises (a) accessing point cloud based input data, the point clouds are recorded from different vantage points (b) providing an array representation of the point clouds using the scan coordinates as rows and columns, (c) identifying image patches corresponding to the object in the arrays, (d) deriving the parameter set based on the identified image patches and the known vantage points.

## Description

### FIELD OF THE INVENTION

The present invention relates to a method of generating a parameterized model for a set of real-world objects in a scene. Said parametrized model represent information about a spatial extent, location and orientation of the corresponding object in a reference system associated with the scene, particularly a relative pose of the objects of the set. The invention also relates to a computer program product and a reality capture system configured to execute said method.

### BACKGROUND OF THE INVENTION

Digital twins have revolutionized planning, designing, and maintaining physical entities, from individual mechanical parts to entire city infrastructures, and beyond. Essentially, a digital twin is a virtual replica of a physical object or system, interfacing real-world and digital data. Using digital twins, organizations can simulate, visualize, and analyze their operations in a risk-free and cost-effective virtual environment. It empowers broad decision-making capabilities through real-time monitoring and predictive analytics, identifying performance gaps, potential breakdowns, or areas demanding optimization or improvements.

The creation of digital twins, however, heavily relies on precise and detailed 3D modelling. 3D models give digital twins their form and structure. Using representations like Computer-Aided Design (CAD) or Building Information Modelling (BIM), engineers replicate digitally the physical attributes of a product or structure, laying the foundation for a digital twin.

The state-of-the-art process of 3D modelling is not without challenges. Typically, it is a supervised process executed by an expert engineer requiring significant time and expertise, particularly when it is necessary to model complex entities. Furthermore, ensuring the reliability of these models is of utmost importance, as minimal discrepancies can lead to significant issues on the downstream tasks. The field of 3D modelling has seen significant advancements with the advent of RGBD imaging and point clouds in various applications, including computer vision, robotics, geographic information systems, and 3D modelling. RGBD images combine color (RGB) and depth (D) information. Point clouds represent objects in a 3D Cartesian coordinate system. Point clouds in the sense of the inventions are dense, contiguous 3D point clouds. While the required density depends strongly on the specific application these point clouds comprise millions of individual points with corresponding real-world coordinates and potentially further associated data. By way of example, for a typical surveying of a construction site 1000 points/m² on a surface normal to the scan direction 10 m from the scanner can be considered as dense point cloud.

One of the primary challenges in 3D modelling from RGBD or 3D point cloud data is handling large and noisy datasets. Techniques such as voxel-based methods, sparse voxel grids or SuperPoint representations have been developed to address the computational cost associated with high-resolution 3D data, affecting significantly to the detail preservation.

Novel deep-learning techniques have achieved remarkable improvements both in image-based and point cloud-based approaches. Particularly in image-based applications, technology has advanced to vision foundation models. These foundation models have been trained based on a vast amount of data and accumulated knowledge about different types of objects that can be localized, described and isolated from the background. The trained models during an inferring are able to extract semantic information from images and have remarkable scene understanding capabilities.

It is desirable to use such modelling not only in 2D but in 3D as well. However, processing unordered, irregular, and noisy 3D point clouds poses unique challenges. Particularly, state of the art models lacks robustness, efficiency, reliability and applicability across diverse scenarios. Improving the accuracy and efficiency of 3D modelling processes, thus, remains a challenge to be resolved.

Moreover, the data acquisition phase is often carried out under field conditions, without access to powerful computing resources. Execution of 3D processing algorithms on "low-end" edge devices is thus bound to multiple limitations. 3D modeling algorithms in particular, involving the processing of complex data structures, computationally intensive arithmetic, and considerable data volumes while placing high demands on the reliability of the output. Most state-of-the-art solutions depend on powerful Neural Networks for 3D segmentation and consistent modelling processes, as of now still mainly done manually by expert human operators. Automation is important, both to optimize the modelling process, to reduce costs and delivery times, as well as to eliminate human bias in the results, caused by interpretation or accidental errors.

Additionally, bringing the modelling process to the field supports multiple downstream tasks, as well as enables the operator to effectively use the time when the measuring device is in operation. Typically, such phases cannot be used productively by the surveyor. In-field modelling from scratch during scanning operation is not realistic, as it is time consuming and requires dedicated hardware not available in the field. However, this time window enables the execution of a semi-supervised modelling process. In other words, the user only reviews the proposals provided by the system, and executes only minor corrections, if needed. This supervision can, additionally, be effectively executed on the companion device (i.e. tablet).

### OBJECT OF THE INVENTION

In view of the above circumstances, one object of the present invention is to provide a more robust yet less resource intensive modelling on the basis of a point cloud.

Another objective of the invention is to reduce the operator's expertise requirements for performing the modeling.

These objectives are at least partly achieved by realizing the characterizing features of the independent claims. Features which further develop the invention in an alternative or advantageous manner are described in the dependent claims.

### SUMMARY OF THE INVENTION

The invention relates to a computer implemented method for generating a first parameter set for a parameterized model representing a first object in a scene. The scene comprises a set of real-world objects.

Object and scene in the sense of the invention represent a real-world setting, e.g. a building with doors and windows, and the objects are parts of said setting. An object in the sense of the invention might represent a part of a physical entity, particularly a façade of a building might be considered as an object. Object in the sense of the invention is extended in at least one dimension (1D), particularly in two dimensions (2D). Nevertheless, a digital representation, e.g. a section of an image that corresponds to the object, can also be referred succinctly as "the object" if the context is clear.

There are no fundamental reasons against the applicability of the invention for cases where the set of real-world objects comprises only one object or a plurality of unrelated objects. However, many aspects of the invention are explained on the basis of scenes comprising a (partial) set of objects in spatial and functional relation to one another. Although the invention is advantageously applicable in such cases, these examples should not be understood as a limitation.

The first parameter set represents information about the spatial extent and location of the first object in a reference system associated with the scene. Particularly the plurality of parameter sets associated with the respective objects represent the spatial relationship, i.e. extent, shape, position and orientation, of the objects in the scene with respect to each other. Parametrized model in the sense of the invention means that the real-world object is described with as few as necessary parameters. By way of example a wall section might be represented as a rectangle with a corresponding 2D extension and position. For more complex objects, the appropriate sophistication of the parameter set can be carried out correspondingly. The parameter set can include semantic data about the functional role of an object or relational data between the objects. By way of example, the parameter set could stipulate that a given object is designated as a "window", which has a certain spatial relationship to another object designated as a "wall". In this case, an adjustment to the parameter set for the "wall" object can be automatically applied to the parameter set for the "window" object. The skilled person understands that the word parameter set does not imply a single contiguous piece of data, rather an ensemble of data associated with the object.

The method comprising (a) accessing input data representing the scene, the input data being based on (i) a first point cloud associated with a first vantage point and acquired by a point cloud recording device, and (ii) a second point cloud associated with a second vantage point and acquired by the point cloud recording device, wherein the first and second vantage points are different, (b) providing, based on the input data, a set of arrays comprising a first array associated with the first vantage point and a second array associated with the second vantage point, wherein each array comprises (i) a row having first image coordinate values associated with first scan coordinates, (ii) a column having second image coordinate values associated with second scan coordinates, and (iii) intensity values representing measurement data associated with the corresponding first and second scan coordinates, (c) providing a first set of image patches by individually processing the first array using an image processing algorithm, wherein each image patch of the first set relates to a single real-world object in the scene, (d) providing a second set of image patches by individually processing the second array using the image processing algorithm, wherein each image patch of the second set relates to a single real-world object in the scene, (e) identifying a first patch in the first set of image patches and a second patch in the second set of image patches corresponding to the first object by jointly processing the first and the second arrays, and (f) deriving the first parameter set based on the identified first and second patches and the first and second vantage points. It is clear to the skilled artisan that the numbering of the steps should not be read as instruction for a sequential execution of the steps, but as a listing to improve the readability. The above-described steps might be performed in any reasonable order.

The features coordinates might be associated with different concepts. Therefore, throughout the specifications the following convention is applied. Real, three-dimensional (3D) coordinates (either Cartesian or polar) of objects are referred to as real-world coordinates. Internal beam deflection related coordinates of scanning devices are referred to as scan coordinates. Coordinates representing rows and columns of arrays are referred to as image coordinates to reflec to their 2D nature.

The skilled person also understands that it is implicit for the present invention that the first and second vantage points provide an overlapping view to the scene, particularly the first object must be recorded from both vantage points. Vantage points can be understood as stationary locations, particularly locations within the scene itself. The present invention is nevertheless applicable to scanning with "continuous locations" such as mobile scanning in which a stream of LiDAR and image data is provided. For such type of scanning virtual vantage points might be created.

A point cloud recording device in the sense of the invention might be any suitable instrument. A non-exclusive list of point cloud recording devices includes laser scanners such as the one disclosed in EP 3 825 720 A1, profiling instruments including multibeam profiling instruments such as the one disclosed in EP 3 816 657 A1, lidar devices, including multibeam lidar devices such as the one disclosed in EP 3 460 519 A1, time of flight cameras, laser trackers or total stations. The structural features, particularly the beam steering mechanism and the generation and the format of point clouds disclosed in said documents are incorporated by reference.

Point cloud recording devices in the sense of the invention are configured to provide dense 3D point clouds from a stationary location. While point cloud recording devices configured to produce full dome point clouds are advantageous due to the amount of data, the inventive method is equally applicable in combination with forward scanning lidars or profilers with limited elevation angle range and similar alternatives.

Furthermore, the person skilled in the art understands that the method according to the invention is not limited to cases in which exactly the same point cloud recording device acquires the first and second point clouds, as long as these devices can be considered equivalent to each other. In other words, the first- and second-point clouds must be structurally compatible with each other.

The arrays are structured in such a way that they resemble a 2D image. The image coordinates in case of a forward looking, multipixel lidar might be the actual pixels. The image coordinates for a laser scanner with a rotating mirror might be derivable from angular (scan) coordinates. Advantageously such representation enables the application of the image processing algorithms for 2D images. It is particularly advantageous that a machine learning method is "unbiased" towards the distorted view created by such image emulation. In other words, 2D algorithms and neural networks can be applied in effectively processing in 3D space but operating in 2D. This reduces computational requirements on device significantly. Due to rotational scanning operation the 2D data, such as objects, are distorted in the given representation, nevertheless the inventive method and 2D algorithm are able to handle semantic information robustly.

The intensity values can be considered as a scalar value, e.g. a distance from the vantage point or a signal level of a return pulse. The intensity values might be equally considered as corresponding to a vector, e.g. color and distance information. These two cases do not represent a fundamental difference for the applicability of image processing methods or machine learning. For reasons of transparency from here on only the first case will be discussed in more detail. The specific aspects of the second case can be applied correspondingly.

One particular example of the image processing algorithm might be an above-mentioned 2D vision foundation model. Many state of the art models are known. A non-exclusive list includes "OneFormer: One Transformer to Rule Universal Image Segmentation" or "Mask2Former: Masked-attention Mask Transformer for Universal Image Segmentation" or a custom model based in lightweight backbone (like "EfficientNet or "MobileViT") with an efficient segmentation head, as proposed in "EfficientPS: Efficient Panoptic Segmentation". The latter approach is particularly advantageous for real-time on-device processing. The skilled person can provide an appropriate model based on the ones on the list mentioned or suitable alternatives.

By way of example the scene might be a building under construction and the survey task might be a derivation of a floorplan. The model might automatically recognize the environment and/or user input is provided to the model regarding the task, e.g. in the form of a dropdown menu. The scene then consists of, as objects, walls, floors, ceilings, windows, doors and unrelated items, e.g. building materials or equipment, which are placed in the scene. Processing of the arrays, either individually or jointly is to be understood in this context. Joint processing can particularly comprise combing first and second patches and parameters sets to make them consistent / coherent, removing duplicates or robustly detecting weak classification with the help of further locations/patches.

After finishing a first point cloud acquisition from a first vantage point the model might process the point cloud and identify image patches in the first array. The image patches correspond to a single specific object and preferably provided with a semantic tag regarding a potential role, e.g. whether a specific image patch belongs to a floor. The model particularly utilizes an understanding of the scene, acquired by training on a large amount of input data, e.g. a structureless area at high elevation coordinates likely belongs to a ceiling. In the next step the same procedure might be repeated for the second vantage point. The model then leverages redundant information available between overlapping scans to provide robust and reliable predictions. In particular it identifies corresponding image patches in the two arrays, e.g. based on a relative arrangement of the image patches and/or on the semantic tags. Finally, a parameter set is proposed for the identified object. The skilled person understands that said parameter set might not be a final parameter set. By way of example, the complete extent of the ceiling might not be determinable from the first and second vantage point.

In some embodiments, the measurement data comprises (a) data relating to a distance from the vantage point and/or, (b) data relating to a return beam signal level, and/or (c) data relating to a surface color, and/or (d) normal vectors relating to a surface defined by a plurality of points in the point cloud, particularly normal vectors corresponding to a local tangential plane. The skilled person understands that the above list is non-exclusive and alternatively or additionally can comprise further (raw) measurement data, radiometric or geometric features. In some specific embodiments, the intensity values are based on a vector comprising surface color related data, particularly RGB data, and data relating to the distance from the vantage point.

In some embodiments, the point cloud recording device is embodied as a laser scanner. The laser scanner comprises a first scanning element, which defines the first scan coordinates as azimuth angle coordinates. The first scanning element might be embodied as a support unit providing a pivotability with respect to a base, particularly a tripod base. The laser scanner also comprises a second scanning element, which defines the second scan coordinates as elevation angle coordinates. The second scanning element might be embodied as a rotating mirror, particularly a fast-rotating mirror pivotable mounted to the support unit. It is clear to the skilled person that here described laser scanner comprises the respective motorized elements, angle encoders and control elements to record the orientation of the scanning elements and control their movement. The first image coordinates are linearly proportional to the azimuth angle coordinates and the second image coordinates are linearly proportional to the elevation angle coordinates. In other words, the arrays can be regarded quasi-images with linearized polar coordinates. In some specific embodiments, the laser scanner is configured to acquire a full dome scan.

In some specific embodiments, the input data is provided as a set of point clouds, particularly during a scanning of the scene. Particularly, the point cloud is provided in a polar coordinate representation. Alternatively or additionally, encoder data can also be supplied in relation to the scanning elements as a substitute for the (real world) polar coordinates. Performing the modelling during a scanning from a further vantage point improves the work efficiency.

In some embodiments, the deriving the first parameter set is based on heuristic approaches, in particular a weighted assembly of predictors. The weight used to assemble the predictors might be, for example, defined by the range/distance measured by the device for each patch from each scanning location or vantage point. This way, the features or objects predicted for each patch will be scaled by the inverse of the distance or the inverse of the squared distance. This way, the contribution/weight of features predicted by the neural network for patches measured from a long distance will be lower than for those computed from a short distance. After computing the assembly of predictors, a robust prediction per patch is available. Heuristic modeling needs to be used to parametrize the object and define the extrinsic relations. Complementary heuristics, like the view angle, as the angle between the normal of the surface and the incident of the LiDAR, beam can be used

Alternatively or additionally, a "learned assembly of predictors" might be used. Such approach can be based on using "attention" mechanisms that "learn" how to integrate the predictions of multiple predictors without any need of heuristics to compute the weight.

In some embodiments, the method further comprises manual adjustment. The manual adjustment comprises (a) displaying the first parameter set, (b) accessing user input data, and (c) based on the user input data either confirming of the first parameter set or adjusting the first parameter set according to the user input data. Particularly the user input data might be provided for a retraining of the model.

In some specific embodiments, the manual adjustment further comprises (a) displaying at least a part of the first and/or the second point cloud, and, (b) displaying the parametrized model of the first object referenced to said displayed point cloud. Such embodiments are advantageous as a direct visual comparison between the proposed model and the raw point cloud enable a faster identification of possible errors for a human operator. This is particularly advantageous for users with lower levels of expertise, as the information so displayed follows a more self-explanatory principle.

Such manual adjustments enable "human-in-the-loop" supervision and correction. The operator can supervise the predictions proposed by the computer implemented method, influencing with those human inputs the upcoming predictions. This way, both parameter sets validated by the operator (True Positives), as well as provided corrections on wrong predictions (False Positives), in particular undetected objects (False Negatives) also, are leveraged in a "feedback mechanism" to enhance predictions in upcoming iterations.

In some specific embodiments, the parameter sets comprise a confidence prediction relating to a confidence value associated with the numerical or semantical information stored in the parameter set. This way every time the human operator is enabled to supervise the modelling operation focusing on the verification of those predictions with lower confidence, if needed. User feedback on such confidences might also be integrated in the method, either implicitly or explicitly. I.e. the confidence or reliability associated to each identified real-world object accordingly might be increased or decreased based on the user feedback.

In some embodiments, the set of real-world objects comprises a second object. The method further comprises (a) identifying a third patch in the first set of image patches and a fourth patch in the second set of image patches corresponding to the second object by jointly processing the first and the second arrays, and (b) deriving a second parameter set for a parameterized model of the second object based on the identified third and fourth patches and the first and second vantage points, and in particular the first parameter set. As the skilled person immediately recognizes the steps of parametrizing the second object is substantially similar to parametrizing the first object. In other words, the same optional features can be correspondingly applied.

A particularly beneficial realization of parametrizing the second object is a so-called incremental approach, when the model utilizes scene understanding. By way of example, after identifying and parametrizing a wall section a window on said wall might be identified and parameterized, particularly by providing a constraint between the wall section object and the window object.

In some embodiments, the set of real-world objects comprises a third object and the input data is further based on a third point cloud associated with a third vantage point and acquired by the point cloud recording device. The features relating to the second vantage point and second point cloud can be correspondingly applied to the third vantage point and third point cloud. The method further comprises (a) providing, based on the input data, the set of arrays such that it comprises a third array associated with the third vantage point, the third array is functionally equivalent to the second array, (b) providing a third set of image patches by individually processing the third array using the image processing algorithm, wherein each image patch of the thirds set relates to a single real-world object in the scene, (c) identifying a fifth patch in the first set of image patches and a sixth patch in the third set of image patches corresponding to the third object by jointly processing the first and the thirds arrays, and (d) deriving a third parameter set for a parameterized model of the third object based on the identified fifth and sixth patches, the first, second and third vantage points, and in particular the first parameter set. As the skilled person immediately recognized the steps of parametrizing the third object is substantially similar to parametrizing the first object. In other words, the same optional features can be correspondingly applied.

A particularly beneficial realization of parametrizing the third object is a so-called accumulative approach, when the model utilizes scene understanding. By way of example a wall section might be parametrized such that it is connected to a previously identified ceiling section. It is clear to the skilled person that knowledge gained from parametrizing the third and/or the second object might be utilized to adjust the first parameter set corresponding to the first object.

In some specific embodiments, each of the parameter sets comprises an object classification, or semantic tag, corresponding to a real-world role of the associated real-world object. The method further comprises (a) deriving a scene graph based on the object classifications, wherein the scene graph represents a structural and functional relationship of the real-world objects, and (b) adjusting the parameter sets based on a set of constraints corresponding to the scene graph. Constraints can be that for instance chair objects cannot be directly connected to the ceiling, or an enforcing geometric priors such as perpendicularly for wall joints. This is called "constrained based optimization" with the goal to remove errors in the modelling process using prior knowledge. This can be a final step in the modelling process.

In some specific embodiments, the screen graph represents hierarchical relationship, i.e. it refers to parent objects, such as a wall in a building, and related child objects such as a window on said wall. In other words, the scene graph condenses the information relating to an understanding of the scene.

Particularly, a scene graph can be built such that node in the graph defines the semantic and parametric representation of each identified real-world object. This is complemented by the edges of the graph, representing the extrinsic relations/intersections between said object. This alternative not only enables an end-to-end artificial intelligence-based solution, without the need of any heuristic-based modelling process, but also provides all the needed information for the generation of derivative products, like floorplans or parametric 3D models, that rely on the knowledge of relationships of the objects for consistent modelling.

In some specific embodiments, the method further comprises (a) assigning the first and second patches to a first object classification corresponding to the first object, (b) providing a first prediction regarding a second object classification for a first non-assigned image patch based on the image coordinate values of the first non-assigned image patch with respect to the first or the second patch and the scene graph, wherein the first non-assigned image patch corresponds to an unsorted object, (c) providing a second prediction regarding a further parameter set relating to the unsorted real-world object based on the first prediction, and (d) identifying a second non-assigned image patch corresponding to the unsorted real-world object based on the second prediction.

In some specific embodiments, the scene is a building and/or a construction site or part of them. The scene graph corresponds to one of a floorplan, a construction plan, a blueprint, a CAD model, a BIM. The skilled person understands that alternative 2D or 3D models, particularly models utilized in the construction or manufacturing industry might be used. Moreover, the applicability of the invention is not limited to the currently available modelling tools, but also includes any reasonable further development of said modelling tools. A set of object classifications comprise a floor, a wall, a ceiling, a window and a door. Alternative object classifications might also be used, e.g. in the case of industrial complexes or large machinery pieces pipes, tanks and valves might be used to determine the scene graph. The skilled person can adapt the invention for the given scene based on the typical structural and functional models used in typical scenes.

In some specific embodiments, the method further comprises proposing a further vantage point to acquire a further point cloud based on the scene graph. Said proposal might be based on a confidence associated with the parameter sets. In other words, the computer implemented method proposes locations for the human operator to cover potential gaps in the 3D scene or to maximize the confidences, and then the reliability of the parametrized models.

In some embodiment, the first parameter set corresponds to a bounded smooth surface, in particular a rectangle. The skilled person understands that rectangular shapes are quite common for buildings. Nevertheless, the system can equally propose other types of schematic geometrical form, particularly when the scene is different from a building or a construction site, e.g. machinery or a plant.

The present invention also relates to a computer program product. The computer program is stored on a machine-readable medium or is embodied by an electromagnetic wave. The computer program comprises a program code segment. The computer program, or particularly the program code segment, has computer-executable instructions for performing an embodiment of the computer implemented method. The skilled person understands that said computer program product might be embodied as a "standalone" computer program or as a particular extension or sub-function of a more generic computer program.

The inventive computer program product particularly has code segments for the execution of (a) accessing the input data representing the scene, particularly accessing the set of point clouds, (b) providing, based on the input data, the set of arrays comprising a first array associated with the first vantage point and a second array associated with the second vantage point, (c) providing the first set of image patches by individually processing the first array, (d) providing the second set of image patches by individually processing the second array, (e) identifying a first patch in the first set of image patches and a second patch in the second set of image patches corresponding to the first object by jointly processing the first and the second arrays, and (f) deriving the first parameter set based on the identified first and second patches and the first and second vantage points. The skilled person understands that features of the computer program product and the computer implemented method correspond to each other and the further specification of the features of the method might be correspondingly applied to the features of the computer program product.

The present invention also relates to a reality capture system comprising a point cloud recording device and a computing unit.

The point cloud recording device comprises a scanning beam source configured to emit a scanning signal along a scanning direction. The scanning beam source might be configured to emit a periodic sequence of scanning pulses. Periodic in the sense of the invention also includes quasiperiodic pulse sequences in which the pulse sequence is modulated by a further periodic and/or a random modulation signal.

The point cloud recording device also comprises a detector configured to detect a return signal returned from object points in a scene. A distance between the point cloud recording device and the object point is derivable based on the emission of the scanning signal and the detection of the return signal. In particular the distance between the point cloud recording device and the object point is determined based on a time of flight of the scanning and return pulses.

The point cloud recording device also comprises a first scanning element configured to scan the scanning direction about an azimuthal axis. Particularly the first scanning element is embodied as a frame or support configured to provide an azimuthal rotation with respect to a static base, particularly a tripod by motorized means. More particularly the first scanning element is configured to provide a continuous rotation with a first rotation speed. It is implicit for the skilled person that the point cloud recording device is provided with appropriate encoders and control elements to measure and adjust the state of the first scanning element.

The point cloud recording device also comprises a second scanning element configured to scan the scanning direction about an elevation axis. Particularly the second scanning element is embodied as a rotating mirror rotatably mounted to the support or frame and provide an elevation angle rotation with respect to the frame by motorized means. More particularly the second scanning element is configured to provide a continuous rotation with a second rotation speed which is higher than the first rotation speed. It is implicit for the skilled person that the point cloud recording device is provided with appropriate encoders and control elements to measure and adjust the state of the second scanning element.

The computing unit is configured to process the data provided by the point cloud recording device as input data. The computing unit is configured to execute an embodiment of the inventive computer program product. The computing unit particularly comprises or accesses a non-transient memory. The non-transient memory comprises the computer program product in an executable manner. The computing unit further comprises wired and wireless interfaces providing a data transfer from the point cloud recording device and/or to a database storing point cloud data in raw or processed format. It is implicit that the computing unit comprises appropriate processors and operative memory to execute the inventive computer program product.

The computing unit might be a field computer, particularly a tablet, associated with the point cloud recording device.

### BRIEF DESCRIPTION OF THE DRAWINGS

By way of example only, specific embodiments of the invention will be described more fully hereinafter with reference to the accompanying figures, wherein:
Figure 1 shows schematically a point cloud recording device during a scanning of scene;
Figure 2 shows schematically a scene graph corresponding to the scene of Figure 1;
Figure 3 shows schematically an array based on a point cloud of the scene of Figure 1 presented as a quasi-image;
Figure 4 shows, by a flowchart, some key steps of an embodiment of the inventive method;
Figure 5 shows, by a flowchart, some key steps of an embodiment of a user feedback.

### SPECIFIC EMBODIMENTS OF THE INVENTION

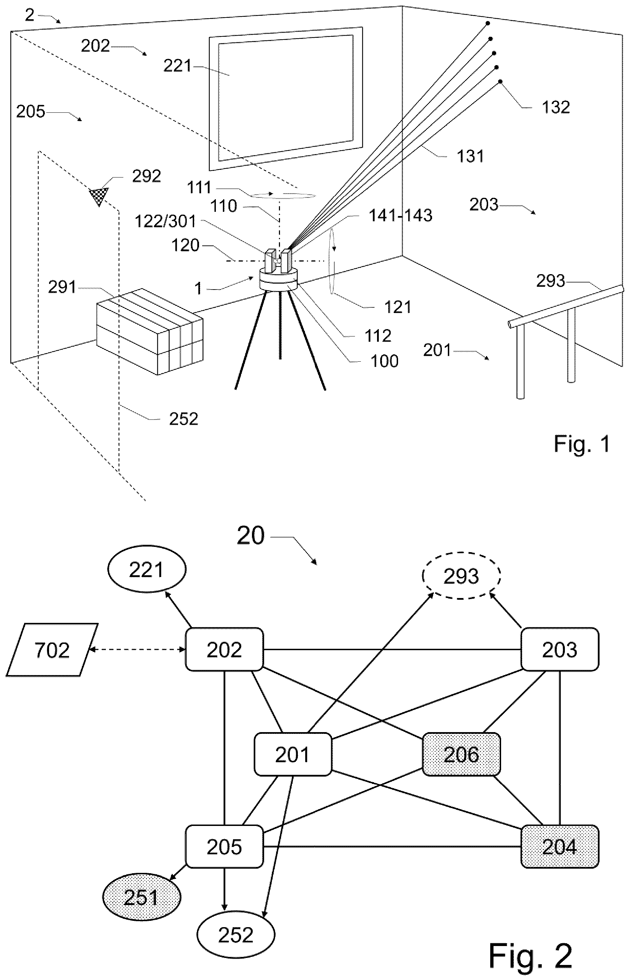

Figure 1 shows schematically a point cloud recording device **1,** embodied as laser scanner, during a recording of point cloud of a setting **2.** The depicted point cloud recording device **1** comprises a first scanning element **112,** depicted as a frame rotatable with respect to a tripod base **100.** The first scanning element **112** is configured to scan a scanning direction **131** about the azimuthal axis **110** with a first rotation speed **111,** in particular a constant first rotation speed. The point cloud recording device **1** comprises a second scanning element **122,** depicted as a rotating mirror. The second scanning element **122** is configured to scan the scanning direction **131** about an elevation axis **120** with a second rotation speed **121,** particularly a constant second rotation speed **121.** Typically, the second rotation speed **121** is much faster than the first rotation speed **111.** Preferably a ratio of the rotation speeds **111,121** is provided such that it enables a recording of an essentially isotropic point cloud. Moreover, providing higher rotation speeds for the lighter second scanning element **122** is easier to realize than for the larger first scanning element **112.** The point cloud recording device **1** comprises a scanning beam source **141** configured to emit a scanning signal along a scanning direction **131,** a detector **142** configured to detect a return signal returned from object points **132** in the scene **2** and corresponding signal processing and control elements **143.** An intersection of the azimuthal **110** and elevation axis **120** might be considered as the (first) vantage point **301** in the sense of the invention.

The scene **2,** depicted as an interior of building under construction, comprises a set of real-world objects **201-203,205,221,252,291-293.** A typical task is to determine a floor plan corresponding to the scene **2,** e.g. to check deviations from a building plan. To do this, an arrangement must be defined for some of the objects contained in the scene **2,** such as the walls **202,203,205** the floor **201,** the door **252,** or the window **221.** Other objects such as the temporarily stored construction material **291,** the construction markings **292** on the wall **201,** or the railing **293** represent a disturbance. A human surveyor intuitively understands these principles. However, the actual identification and parameterization of the important objects in a noisy point cloud, especially with a low-performance field computer, is a challenging task that requires experience.

Figure 2 shows schematically a scene graph **20** corresponding to the scene depicted in Figure 1. The same reference sign refers to the same real-world object as in Figure 1, while objects not explicitly shown in said graph have greyed backgrounds. The screen graph **20** illustrates the spatial constraints and the functional relationship between the real-world objects **201-206,221,251,252,293.** By way of example a parameter set **702** containing information about the spatial extent and location of the corresponding wall element **202** is also depicted in this graph **20.** The skilled person understands that similar parameter sets are associated with all the real-world objects **201-206,221,251,252,293.** The depiction of further parameter sets is omitted for transparency reasons.

The depicted scene graph **20** provides an understanding of the scene and constructed in a hierarchical manner. The floor **201,** the wall elements **202-205** and the ceiling **206** are primary elements. The windows **221,251,** the door **252** and the railing **293** are secondary elements. Solid lines represent constraints between the elements. In other words, a change of the parameter set **702** associated with wall element **202** can cause a corresponding change of the parameter sets associated with the floor **201,** the ceiling **206,** the neighboring wall elements **203,205** and the window **221.** Arrows represent a dependency or one-sided relationship. In other words, the parameter set of the window **221** must be so chosen that said window **221** is located on the wall element **202.**

The railing **293** is marked by a dashed boundary, this represents that it is not known whether said object truly belong to the scene, or in other words, whether it should be considered in the derivation of the scene graph.

Part of such scene graph **20** might be provided to or by the model beforehand under the consideration of the scan task. E.g. during the derivation of a floor plan of a furnished room the presence of a floor **201,** a ceiling **206,** and a plurality of wall sections **202-205** connecting these two can be postulated in advance. The preset object set might be parametrized and further objects are added in an accumulative and incremental manner.

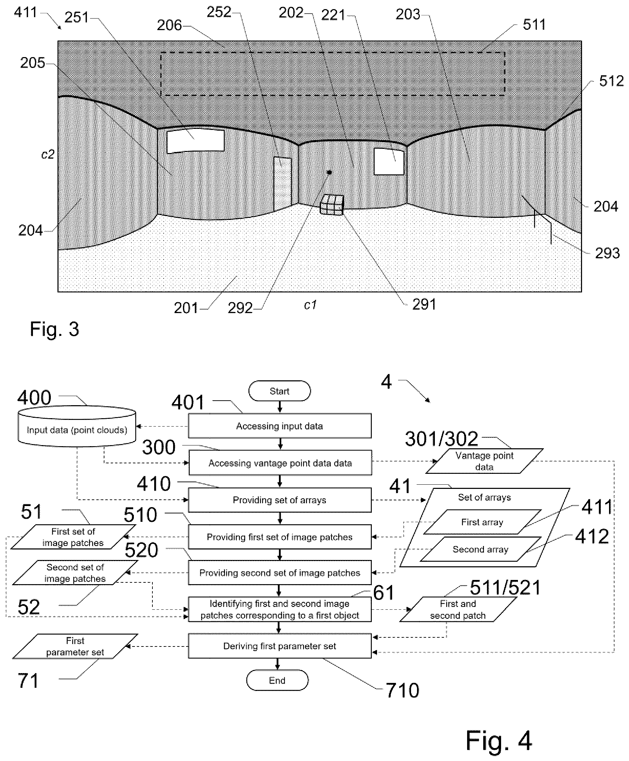

Figure 3 shows a visualization of a first array **411** corresponding to the scene shown in Figure 1. The first array **411** has rows having first image coordinate values **c1** associated with first scan coordinates, i.e. the azimuthal coordinates of the point cloud recording device. The first array **411** has columns having second image coordinate values **c2** associated with second scan coordinates, i.e. the elevation coordinates of the point cloud recording device. By way of example, said image coordinates **c1,c2** are linearly proportional to said spherical coordinates. The skilled person understands that while this representation allows an easy transfer of the point cloud data, other representations are also possible. Especially since the selection shown overweights the area near nadir and zenith, while most of the significant objects are located near the center plane of the laser scanner. This drawback, however, can be equally compensated by an appropriate training of the neural network.

The first array **411** has intensity values representing measurement data associated with the corresponding first and second scan coordinates. For the sake of transparency, the intensity values in the depicted embodiment correspond to a reflectivity of the surfaces, this might be derived from a return signal strength normed to the distance of the object point. As a result, the different objects **201-206,221,251,252,291-293** can be distinguished more easily. Moreover, boundary lines separating said objects are also added to aid said distinction.

The construction marking **292** produced in this representation an artifact due to its high reflectivity, the windows **221,251** are hardly reflecting therefore they appear as a hole in the first array **411** displayed as an image. Similarly, the white-painted ceiling **206** and the wall sections **202-205** are more reflective than the floor **201.** Due to the way the point cloud is captured (or the conversion of the rectangular shape of the building into polar coordinates), the first array **411** appears as a distorted image to a human observer. However, this does not pose a particular problem for artificial intelligence, as it is trained using similar input data. The model, based on this training could identify a first patch **511** on the top part of the first array **411** as area associated with a ceiling **206.** In this specific example a boundary **512** associated with the ceiling **206** might also be identified. Further image patches can be identified in a similar manner, thereby providing the first set of image patches associated with the first vantage point. The second set of image patches can be provided during the processing of a second array associated with the second vantage point.

The skilled person understands that the depicted example was selected due to didactic reasons and not owing to its particularly beneficial properties. On the contrary, providing the intensity values as vectors (e.g. comprising distance values, surface normal and/or gradient, color information) is advantageous for the robustness of identifying image patches and associating them with real-world objects. Since RGB processing involves three independent pieces of "intensity" information, there is no fundamental obstacle for image processing algorithms for such vector-based processing.

Figure 4 shows, by a flowchart, an embodiment of the method **4** of deriving the first parameter set. Flow lines / commands are depicted with bold lines while data lines are depicted with dashed lines. Some flowlines and/or data lines might not be shown in the schematic flowcharts for transparency reasons. Moreover, this and any further flowcharts focus on certain aspects of the present invention, i.e. the information relating to further aspects can be abstracted. In the first step input data **400** representing the scene is accessed **401.** The input data **400** is based on a set of point clouds, particularly embodied as or equivalent to said point clouds, taken from known vantage points **301,302.** In the next steps the set of arrays **41** and the corresponding vantage points **301,302** are provided **300,410** based on the input data **400.** This is followed by providing **510** the first set of image patches **51** based on the first array **411,** and providing **520** the second set of image patches **52** based on the second array **412.** Each of the image patches in the sets **51,52** relates to a single real-world object. Preferably the image patch represents substantially the whole real-world object, however image patches corresponding to one or more cardinal features of a real-world object are equally applicable. Subsequently a first patch **511** in the first set of image patches **51** and a second patch **521** in the second set of image patches **52** are identified **61.** Said first **511** and second image patches **521** corresponding to a first object. Finally, the first parameter set **71** is derived **710** based on the identified first **511** and second patches **521** and the first **301** and second vantage points **302.**

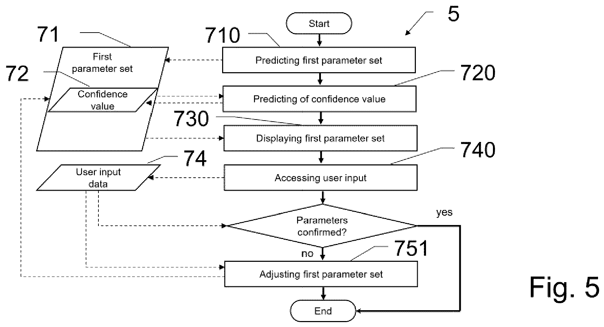

Figure 5 shows, by a flowchart, an embodiment a manual adjustment **5.** In the first step the numerical and sematic information stored in the first parameter set **71** is predicted **710,** e.g. as shown in Figure 4. The skilled person understands that this step might be performed via many iterations, and the details are omitted due to transparency reasons. The prediction **710** of the first parameter set **71** also comprises a prediction **720** of an associated confidence value **72.** The prediction **720** of the confidence value **72** is depicted as a separate step, again for transparency reasons. In actual embodiments the prediction **710** of the numerical and semantic information and the confidence value **72** might be interweaved.

When the (preliminary) first parameter set **71** is calculated it is displayed **730** for a user to verify it. While not shown, a graphical representation of an object according to the first parameter set and one or more (partial) point clouds might also be displayed in the same reference system. The system accesses **740** a user input **74.** When the user confirms the first parameter set **71** it is kept. Alternatively, the first parameter set **71** can be adjusted **751** based on the user input. The adjustment **751** might carried out in a manner that a new first parameter set **71** is predicted. The user input **74** and the first parameter set **71** before and after the adjustment **751** might be provided to a training database.

Although the invention is illustrated above, partly with reference to some specific embodiments, it must be understood that numerous modifications and combinations of different features of the embodiments can be made. All of these modifications lie within the scope of the appended claims.

## Claims

1. Computer implemented method (4) for generating (710) a first parameter set (71) for a parameterized model representing a first object in a scene (2), wherein
- the scene (2) comprises a set of real-world objects (201 - 206,221,251,252,291-293),
- the first parameter set (71) represents information about the spatial extent and location of the first object in a reference system associated with the scene (2),
the method (4) comprising
- accessing (401) input data (400) representing the scene (2), the input data (400) being based on
∘ a first point cloud associated with a first vantage point (301) and acquired by a point cloud recording device (1), and
∘ a second point cloud associated with a second vantage point (302) and acquired by the point cloud recording device (1), wherein the first (301) and second vantage points (302) are different,
- providing (410), based on the input data (400), a set of arrays (41) comprising a first array (411) associated with the first vantage point (301) and a second array (412) associated with the second vantage point (302), wherein each array (411,412) comprises
∘ a row having first image coordinate values (c1) associated with first scan coordinates,
∘ a column having second image coordinate (c2) values associated with second scan coordinates, and
∘ intensity values representing measurement data associated with the corresponding first and second scan coordinates,
- providing (510) a first set of image patches (51) by individually processing the first array (411) using an image processing algorithm, wherein each image patch of the first set (51) relates to a single real-world object (201 - 206,221,251,252,291-293) in the scene (2),
- providing (520) a second set of image patches (52) by individually processing the second array (412) using the image processing algorithm, wherein each image patch of the second set (52) relates to a single real-world object (201-206,221,251,252,291-293) in the scene (2),
- identifying (61) a first patch (511) in the first set of image patches (51) and a second patch (521) in the second set of image patches (52) corresponding to the first object by jointly processing the first (411) and the second arrays (412), and
- deriving (710) the first parameter set (71) based on the identified first (511) and second patches (522) and the first (301) and second vantage points (302).

2. The method (4) according to claim 1 further comprising a manual adjustment (5), wherein the manual adjustment (5) comprises
- displaying (730) the first parameter set (71),
- accessing (740) user input data (74), and
- based on the user input data (74) either confirming of the first parameter set (71) or adjusting (751) the first parameter set (71) according to the user input data (74),
in particular wherein the first parameter set (71) comprises a confidence prediction relating to a confidence value (72) associated with numerical or semantical information stored in the first parameter set (71).

3. The method (4) according to claim 2, wherein the manual adjustment (5) further comprising
- displaying at least a part of the first and/or the second point cloud, and
- displaying the parametrized model of the first object referenced to said displayed point cloud.

4. The method (4) according to any one of the preceding claims, wherein the measurement data comprising
- data relating to a distance from the vantage point (301,302), and/or
- data relating to a return beam signal level, and/or
- data relating to a surface color, and/or
- normal vectors relating to a surface defined by a plurality of points in the point cloud,
in particular wherein the intensity values are based on a vector comprising surface color related data, particularly RGB data, and data relating to the distance from the vantage point (301,302).

5. The method (4) according to any one of the preceding claims, wherein
- the point cloud recording device (1) is embodied as a laser scanner with a first scanning element (112), which defines the first scan coordinates as azimuth angle coordinates, and a second scanning element (122), which defines the second scan coordinates as elevation angle coordinates, the laser scanner in particular configured to acquire a full dome scan,
- the first image coordinates (c1) are linearly proportional to the azimuth angle coordinates, and
- the second image coordinates (c2) are linearly proportional to the elevation angle coordinates.

6. The method according to claim 5, wherein the input data (400) is provided (401) as a set of point clouds, particularly during a scanning of the scene (2).

7. The method (4) according to any one of the preceding claims, wherein the deriving (710) the first parameter set (71) is based on heuristic approaches, in particular a weighted assembly of predictors.

8. The method (4) according to any one of the preceding claims, wherein the set of real-world objects (201-206,221,251,252,291-293) comprises a second object and the method (4) further comprises
- identifying a third patch in the first set of image patches (51) and a fourth patch in the second set of image patches (52) corresponding to the second object by jointly processing the first (411) and the second arrays (412), and
- deriving a second parameter set for a parameterized model of the second object based on the identified third and fourth patches and the first (301) and second vantage points (302), and in particular the first parameter set (71).

9. The method (4) according to any one of the preceding claims, wherein
- the set of real-world objects (201-206,221,251,252,291-293) comprises a third object, and
- the input data (400) is further based on a third point cloud associated with a third vantage point and acquired by the point cloud recording device (1),
wherein the method (4) further comprises,
- providing, based on the input data (400), the set of arrays (41) such that it comprises a third array associated with the third vantage point,
- providing a third set of image patches by individually processing the third array using the image processing algoirthm, wherein each image patch of the third set relates to a single real-world object (201-206,221,251,252,291-293) in the scene (2),
- identifying a fifth patch in the first set of image patches (51) and a sixth patch in the third set of image patches corresponding to the third object by jointly processing the first (411) and the thirds arrays, and
- deriving a third parameter set for a parameterized model of the third object based on the identified fifth and sixth patches, the first (301), second (302) and third vantage points, and in particular the first parameter set (71).

10. The method (4) according to any one of claims 8 or 9, wherein
- each of the parameter sets (71,702) comprises an object classification corresponding to a real-world role of the associated real-world object (201-206,221,251,252,291-293),
- the method (4) further comprises
∘ deriving a scene graph (20) based on the object classifications, wherein the scene graph (20) represents a structural and functional relationship of the real-world objects (201-206,221,251,252,291-293), in particular as a hierarchical relationship, and
∘ adjusting the parameter sets (71,702) based on a set of constraints corresponding to the scene graph (20),
in particular, wherein the method (4) further comprising
- assigning the first (511) and second patches (521) to a first object classification corresponding to the first object,
- providing a first prediction regarding a second object classification for a first non-assiged image patch based on the image coordinate values (c1,c2) of the first non-assigned image patch with respect to the first (511) or the second patch (521) and the scene graph (20), wherein the first non-assigned image patch corresponds to an unsorted real-world object,
- providing a second prediction regarding a further parameter set relating to the unsorted real-world object based on the first prediction, and
- identifying a second non-assigned image patch corresponding to the unsorted real-world object based on the second prediction.

11. The method (4) according to claim 10, wherein
- the scene (2) is a building and/or a construction site,
- the scene graph (20) corresponds to one of a floorplan, a construction plan, a blueprint, a computer-aided design model, and a building information model, and
- a set of object classifications comprise a floor (201), a wall (202-205), a ceiling (206), a window (221,251) and a door (252).

12. The method (4) according to any one of claims 10 to 11 comprising a proposing a further vantage point to acquire a further point cloud based on the scene graph (20).

13. The method (4) according to any one of the preceding claims, wherein the first parameter set (71) corresponds to a bounded smooth surface, in particular a rectangle.

14. Computer program product comprising a program code which is stored on a machine-readable medium or being embodied by an electromagnetic wave and comprising a program code, the program code comprising a program code segment and has computer-executable instructions for performing the computational steps of a method (4) according to any one of claims 1 to 13.

15. Reality capture system comprising a point cloud recording device (1) and a computing unit, wherein the point cloud recording device (1) comprises
- a scanning beam source (141) configured to emit a scanning signal along a scanning direction (131), in particular to emit a periodic sequence of scanning pulses,
- a detector (142) configured to detect a return signal returned from object points (132) in a scene (2), wherein a distance between the point cloud recording device (1) and the object point (132) is derivable based on the emission of the scanning signal and the detection of the return signal, in particular based on a time of flight of the scanning and return pulses,
- a first scanning element (112) configured to scan the scanning direction (131) about an azimuthal axis (110), in particular wherein the first scanning element (112) is configured to provide a continuous rotation with a first rotation speed (111), and
- a second scanning element (122) configured to scan the scanning direction (131) about an elevation axis (120), in particular wherein the second scanning element (122) is configured to provide a continuous rotation with a second rotation speed (121) which is higher than the first rotation speed (111),
wherein the computing unit
- is configured to process the data provided by the point cloud recording device (1) as input data (400), and
- is configured to execute a computer program product according to claim 14.
